# EUROPEAN PATENT APPLICATION

(11) **EP 4 039 719 A1**
(43) Date of publication of application: **10.08.2022**
(21) Application number: 20872148.0
(22) Date of filing: 28.09.2020
(51) Int. Cl.: C08F 220/18, C08L 33/06, C08J 5/18, A01G 9/14

(54) **ADDITIVE FOR LIGHT CONTROL FILMS, AND THERMOSENSITIVE LIGHT CONTROL FILM**

(30) Priority: 30.09.2019 JP 2019179768
(71) Applicant: Nitta Corporation, Osaka-shi, Osaka 556-0022 (JP)
(72) Inventor: MARUTANI Kosuke, Yamatokohriyama-shi, Nara 639-1085 (JP); YAMASHITA, Koji, Yamatokohriyama-shi, Nara 639-1085 (JP); YAMAGUCHI, Satoshi, Yamatokohriyama-shi, Nara 639-1085 (JP); MEGUMI, Takashi, Yamatokohriyama-shi, Nara 639-1085 (JP); KATO, Takumi, Yamatokohriyama-shi, Nara 639-1085 (JP)
(74) Representative: Viering, Jentschura & Partner mbB Patent- und Rechtsanwälte
(86) International application number: PCT/JP2020/036636
(87) International publication number: WO 2021/065801

(57) **Abstract**

An additive for a light control film of the present invention comprises a side chain crystal polymer which is crystallized at a temperature below a melting point and shows fluidity at a temperature above the melting point. A thermosensitive light control film of the present invention contains the additive for the light control film and a base resin. The thermosensitive light control film is transparent at the temperature below the melting point and is non-transparent at the temperature above the melting point.

## Description

### TECHNICAL FIELD

The present invention relates to an additive for a light control film and a thermosensitive light control film.

### BACKGROUND

A light control film whose transparency changes depending on temperature such as an outside air temperature is known (refer to, for example, Patent Document 1). The light control film is transparent at room temperature or the like, but it gets white turbid or the like and becomes non-transparent at high temperature, and thus if it is used in a plastic greenhouse or the like, the effects that leaf scorch is prevented and the temperature inside the greenhouse is decreased can be obtained.

### PRIOR ART DOCUMENT

### PATENT DOCUMENT

Patent Document 1: Japanese Unexamined Patent Publication No. 2018-203950

### SUMMARY OF THE INVENTION

### PROBLEMS TO BE SOLVED BY THE INVENTION

An object of the present invention is to provide an additive for a light control film and a thermosensitive light control film, which can control transparency and non-transparency of the light control film by temperature.

### MEANS OF SOLVING THE PROBLEMS

An additive for a light control film of the present invention comprises a side chain crystal polymer which is crystallized at a temperature below a melting point and shows fluidity at a temperature above the melting point. The thermosensitive light control film of the present invention contains the additive for the light control film and a base resin.

### EFFECTS OF THE INVENTION

According to the present invention, there are effects that transparency and non-transparency of the light control film can be controlled by temperature, and the light control film can be changed to the transparency at a temperature below the melting point and it can be changed to the non-transparency at a temperature above the melting point. For example, if it is used in a plastic greenhouse or the like, the effects that leaf scorch is prevented and the temperature inside the greenhouse is decreased can be obtained.

### BRIEF DESCRIPTION OF THE DRAWINGS

Fig. 1 is a graph showing measurement results of refractive indexes of the base resin and Synthetic Examples 2 to 4.
Fig. 2 is a graph showing measurement results of light transmittances of Example 4.

### EMBODIMENTS FOR CARRYING OUT THE INVENTION

### <Additive for light control film>

An additive for a light control film (hereinafter referred to as "additive") according to an embodiment of the present invention is described in detail below.

An additive of the present embodiment comprises a side chain crystal polymer which is crystallized at a temperature below a melting point and shows fluidity at a temperature above the melting point.

This additive is used by adding to a base resin of the light control film for transparency and non-transparency of the light control film, that is for expressing a light control function (turbidity change) in the light control film. When the additive is added to the base resin of the light control film, the effect that transparency and non-transparency of the light control film can be controlled by temperature is obtained.

Specifically, the above-described side chain crystal polymer is a polymer having a melting point. The melting point denotes a temperature at which a specific portion of the polymer initially aligned in an orderly array enters a disordered state by a certain equilibrium process. The temperature is a value obtainable from a measurement under measuring condition of 10°C/min by using a differential scanning calorimetry (DSC). The side chain crystal polymer is crystallized at a temperature below the melting point, and it is subjected to phase transition and shows fluidity at a temperature above the melting point. That is, the side chain crystal polymer has thermosensitivity that reversibly causes a crystal state and a fluid state correspondingly to a temperature change.

Here, the side chain crystal polymer has a refractive index which changes (decreases) rapidly (steeply) near the melting point. Therefore, if the refractive index of the additive (the side chain crystal polymer) at the temperature below the melting point is set to be a value close to that of the base resin, the refractive indexes of these two will be close to each other at the temperature below the melting point, and the difference in the refractive indexes of these two will become larger at the temperature above the melting point. Hence, the light control film containing the additive of the present embodiment becomes transparent at the temperature below the melting point, and it gets white turbid or the like and becomes non-transparent at the temperature above the melting point.

In this way, the additive of the present embodiment can control transparency and non-transparency of the light control film by the temperature because it uses changes in an optical property (refractive index) of the side chain crystal polymer in addition to the thermosensitivity of the side chain crystal polymer. The temperature at which the film changes from transparent to non-transparent can be controlled by the melting point of the side chain crystal polymer. The degree of the non-transparency (turbidity), such as white turbidity, can be controlled by a composition of monomer components constituting the side chain crystal polymer, a mixing ratio of the base resin and the additive, or the like.

The melting point of the side chain crystal polymer is preferably 20 to 70°C, more preferably 25 to 60°C. The melting point can be adjusted by changing, for example, the composition of the monomer components constituting the side chain crystal polymer. As a specific example, the melting point can be adjusted by changing the length of the side chains in the side chain crystal polymer.

The side chain crystal polymer includes a (meth)acrylate having a straight-chain alkyl group having 16 or more carbon atoms as a monomer component. In the (meth)acrylate having the straight-chain alkyl group having 16 or more carbon atoms, the straight-chain alkyl group having 16 or more carbon atoms functions as a side chain crystal part in the side chain crystal polymer. In other words, the side chain crystal polymer is a comb-shaped polymer having straight-chain alkyl group having 16 or more carbon atoms in its side chain, and it is crystallized by aligning this side chain into an orderly arrangement by intermolecular force or the like. The (meth)acrylate described above denotes acrylate or methacrylate.

Examples of the (meth)acrylate having the straight-chain alkyl group having 16 or more carbon atoms includes (meth)acrylates having a linear alkyl group having 16 to 22 carbon atoms, such as cetyl (meth)acrylate, stearyl (meth)acrylate, eicosyl (meth)acrylate, and behenyl (meth)acrylate. Only one kind of the illustrated (meth)acrylates may be used, or two or more kinds of them may be used in combination. The (meth)acrylate having the straight-chain alkyl group having 16 or more carbon atoms is preferably contained in the monomer component constituting the side chain crystal polymer in a proportion of 10 to 100% by weight, and more preferably 20 to 100% by weight.

The monomer component constituting the side chain crystal polymer may include other monomers that can be copolymerized with the (meth)acrylate having the straight-chain alkyl group having 16 or more carbon atoms. Examples of the other monomers include (meth)acrylate having an alkyl group having 1 to 8 carbon atoms, a polar monomer, and a high refractive index monomer. In the side chain crystal polymer, other monomers that can be copolymerized with the (meth)acrylate having the straight-chain alkyl group having 16 or more carbon atoms can be selected from the plurality of monomers illustrated, and the refractive index at the temperature below the melting point can be adjusted arbitrarily depending on the monomer selected. In other words, in the side chain crystal polymer, the refractive index at the temperature below the melting point can be adjusted by copolymerizing monomers having various refractive indexes with the (meth)acrylate having the straight-chain alkyl group having 16 or more carbon atoms. Hence, the additive of the present embodiment including such a side chain crystal polymer can adjust its refractive index in accordance with the refractive index of the base resin. Accordingly, the additive of the present embodiment can be added to various types of base resins.

Examples of the (meth)acrylate having the alkyl group having 1 to 8 carbon atoms include methyl (meth)acrylate, ethyl (meth)acrylate, butyl (meth)acrylate, hexyl (meth)acrylate, and 2-ethylhexyl acrylate. Only one kind of the illustrated (meth)acrylates may be used, or two or more kinds of them may be used in combination. The (meth)acrylate having the alkyl group having 1 to 8 carbon atoms is preferably contained in the monomer component constituting the side chain crystal polymer in a proportion of 70% or less by weight, and more preferably 1 to 70% by weight.

Examples of the polar monomer include ethylenically unsaturated monomers having a carboxyl group such as acrylic acid, methacrylic acid, crotonic acid, itaconic acid, maleic acid, and fumaric acid; and other ethylenically unsaturated monomers having a hydroxyl group such as 2-hydroxyethyl (meth)acrylate, 2-hydroxypropyl (meth)acrylate, and 2-hydroxyhexyl (meth)acrylate. Only one kind of the illustrated polar monomers may be used, or two or more kinds of them may be used in combination. The polar monomer is preferably contained in the monomer component constituting the side chain crystal polymer in a proportion of 10% or less by weight, and more preferably 1 to 10% by weight. Moreover, the polar monomer may not be used.

The high refractive index monomer is a monomer having a refractive index of 1.500 or more, and preferably 1.500 to 1.600. The refractive index is a value measured by an automatic refractometer. Examples of the high refractive index monomer include styrene (the refractive index:1.59), 2-(O-phenylphenoxy) ethyl acrylate (the refractive index: 1.577), and 2-propenoic acid (3-phenoxyphenyl) methyl ester (the refractive index: 1.566). Only one kind of the illustrated high refractive index monomers may be used, or two or more kinds of them may be used in combination. The high refractive index monomer is preferably contained in the monomer component constituting the side chain crystal polymer in a proportion of 40% or less by weight, and more preferably 1 to 30% by weight.

A preferred composition of the side chain crystal polymer is 20 to 90% by weight of the (meth)acrylate having the straight-chain alkyl group having 16 or more carbon atoms, 5 to 70% by weight of the (meth)acrylate having the alkyl group having 1 to 8 carbon atoms, and 5 to 10% by weight of the polar monomer. Other preferred composition of the side chain crystal polymer is 85 to 95% by weight of the (meth)acrylate having the straight-chain alkyl group having 16 or more carbon atoms, and 5 to 15% by weight of the (meth)acrylate having the alkyl group having 1 to 8 carbon atoms. Other preferred composition of the side chain crystal polymer is 70 to 95% by weight of the (meth)acrylate having the straight-chain alkyl group having 16 or more carbon atoms, and 5 to 30% by weight of the high refractive index monomer.

Methods for polymerizing the monomer component include a solution polymerization method, a bulk polymerization method, a suspension polymerization method, and an emulsion polymerization method. When the solution polymerization method is employed, the monomer component is mixed with a solvent, a polymerization initiator, a chain transfer agent or the like is added as necessary, and the reaction is carried out for 2 to 10 hours at approximately 40 to 90°C while stirring.

A weight average molecular weight of the side chain crystal polymer is preferably 100,000 or more, more preferably 200,000 to 900,000, and still more preferably 200,000 to 700,000. The weight average molecular weight is obtainable by measuring with a gel permeation chromatography (GPC) and expressing a measured value in terms of polystyrene.

The refractive indexes of the additive (the side chain crystal polymer) are, for example, 1.480 to 1.520 at the temperature below the melting point, and 1.440 to 1.495 at the temperature above the melting point. The refractive indexes of the additive are not limited to the illustrated numerical ranges. The refractive indexes of the additive can be set according to the refractive index of the base resin.

In the additive, a difference (an absolute value) between the refractive index at the temperature below the melting point and the refractive index at the temperature above the melting point may be 0.020 or more, preferably 0.020 to 0.070, and still more preferably 0.020 to 0.040. In this case, the light control film containing the additive of the present embodiment is likely to change significantly from transparent to non-transparent.

### <Thermosensitive light control film>

A thermosensitive light control film (hereinafter referred to as "light control film") according to an embodiment of the present invention is described in detail below.

The light control film of the present embodiment contains the above-described additive and a base resin. As described above, the additive includes a side chain crystal polymer having thermosensitivity. Since transparency and non-transparency of the light control film can be controlled by temperature, the light control film of the present embodiment containing the additive has the thermosensitivity derived from the side chain crystal polymer and it is light controlable by the temperature.

The light control film of the present embodiment is transparent at a temperature below a melting point and is non-transparent at a temperature above the melting point. Additionally, the light control film can repeatedly be transparent and non-transparent because the side chain crystal polymer reversibly undergoes a crystal state and a fluid state in response to temperature changes. The transparency and the non-transparency (the light control function) in the light control film may be an extent which can be recognized visually.

The light control film may contain the additive in a proportion that causes the light control film to exhibit the thermosensitivity derived from the side chain crystal polymer. It means that the light control film may contain the additive in a proportion at which the light control function by the additive can be obtained. For example, an amount of the additive is 5 to 45% by weight. An amount of the base resin is, for example, 55% to 95% by weight. In the light control film, the base resin may be contained in a higher ratio by weight than the additive. Specifically, a weight ratio of the base resin to the additive may be 95:5 to 55:45. The respective amounts of the additive and the base resin are not limited to the numerical ranges illustrated.

At the temperature below the melting point, a difference (an absolute value) between a refractive index of the additive and a refractive index of the base resin may be less than 0.010, preferably 0.001 or more and less than 0.010. Additionally, at the temperature above the melting point, a difference (the absolute value) between a refractive index of the additive and a refractive index of the base resin may be 0.010 or more, preferably 0.010 to 0.050, and more preferably 0.010 to 0.030. In these cases, the light control film changes significantly from transparent to non-transparent. As to the refractive index of the base resin, for example, when an ethylene-methyl methacrylate copolymer resin (or a methyl methacrylate resin) is used as the base resin, the refractive index may be 1.480 to 1.520 at the temperature below the melting point, and 1.450 to 1.500 at the temperature above the melting point.

Examples of the base resin include a polyethylene terephthalate resin, a polyvinyl chloride resin, an ethylene-methyl methacrylate copolymer resin, polycarbonate, a methyl methacrylate resin, polyvinyl butyral, polyvinyl acetate, an ethylene vinyl acetate copolymer resin (EVA), and a polyolefin resin. The polyolefin resin includes, for example, a polyethylene resin or the like. The polyethylene resin may be, for example, a straight-chain low-density polyethylene resin (LLDPE), a low-density polyethylene resin (LDPE) or the like. Two or more base resins may be mixed and used together. The weight average molecular weight of the base resin is not particularly limited.

A thickness of the light control film is preferably 10 to 500 µm, and more preferably 40 to 150 µm. The light control film is a concept that covers from the film-shape to the sheet-shape without being limited only to the film-shape, as long as the effect of the present embodiment is not impaired. In other words, the thermosensitive light control film may be referred to as a thermosensitive light control sheet.

The light control film may be used for agricultural purposes, for example, in a plastic greenhouse. Since the light control film is capable of significantly changing from transparent to non-transparent, the light control film can suppress a temperature rise in the greenhouse when applied to the plastic greenhouse. The light control film is not limited to agricultural uses. For example, the light control film may be used for building materials, automobiles, or the like.

Although the embodiment according to the present invention has been illustrated above, it goes without saying that the present invention is not limited to the above-described embodiment, but anything can be applied unless it departs from the scope of the present invention.

For example, the light control film of the above-described embodiment is transparent at the temperature below the melting point and is non-transparent at the temperature above the melting point, but the transparent and the non-transparent can be reversed. That is, the light control film may be non-transparent at the temperature below the melting point and is transparent at the temperature above the melting point. In constituting such a light control film, a refractive index of the additive (the side chain crystal polymer) at the temperature below the melting point may be set to a value far from the refractive index of the base resin, and the refractive index of the additive (the side chain crystal polymer) at the temperature above the melting point may be set to a value close to the refractive index of the base resin.

The present invention is described in detail below by illustrating Synthetic Examples and Examples. However, the present invention is not limited to the following Synthetic Examples and Examples.

### (Synthesis Examples 1 to 7: Side Chain Crystal Polymers)

First, the monomers shown in Table 1 were added to a reaction vessel in the proportions shown in Table 1. The monomers shown in Table 1 are as follows.
C22A: behenyl acrylate
C18A: stearyl acrylate
C16A: cetyl acrylate
C1A: methyl acrylate
AA: acrylic acid
EHA: 2-ethylhexyl acrylate
POB-A: 2-propenoic acid (3-phenoxyphenyl) methyl ester, which is a high refractive index monomer, manufactured by Kyoeisha Chemical Co.,Ltd.
HRD-01: 2-(O-phenylphenoxy) ethyl acrylate, which is a high refractive index monomer, manufactured by Nisshoku Techno Fine Chemical Co.,Ltd.

Next, 0.5 parts by weight of "Perhexyl PV" manufactured by NOF Corporation was added to the reaction vessel with respect to 100 parts by weight of the monomer mixture as a polymerization initiator, and then a mixed solution was obtained by adding a mixed solvent in which a weight ratio of ethyl acetate to heptane was 70:30 so as to have a solid content of 30% by weight to the reaction vessel. The obtained mixed solution was stirred at 55°C for 4 hours to copolymerize each monomer to obtain a side chain crystal polymer (an additive).

Weight average molecular weights and melting points of the obtained side chain crystal polymers are shown in Table 1. The weight average molecular weight was measured by measuring with a GPC and expressing a measured value in terms of polystyrene. The melting point is a value measured under a measurement condition of 10°C/min by using a DSC.

**[Table 1]**

| | Monomer Components¹⁾ (% by weight) | | | | | | | | Weight Average Molecular Weight | Melting Point (°C) |
|---|---|---|---|---|---|---|---|---|---|---|
| | C22A | C18A | C16A | C1A | AA | EHA | POB-A | HRD-O1 | | |
| Synthetic Example 1 | 45 | - | - | 50 | 5 | - | - | - | 600000 | 55 |
| Synthetic Example 2 | - | 30 | 60 | - | - | - | 10 | - | 300000 | 35 |
| Synthetic Example 3 | - | 30 | 45 | - | - | - | - | 25 | 400000 | 35 |
| Synthetic Example 4 | - | 30 | 60 | - | - | 10 | - | - | 500000 | 35 |
| Synthetic Example 5 | 15 | 35 | - | 45 | 5 | - | - | - | 500000 | 40 |
| Synthetic Example 6 | - | 45 | - | 50 | 5 | - | - | - | 500000 | 35 |
| Synthetic Example 7 | - | 30 | 15 | 50 | 5 | - | - | - | 500000 | 30 |

| | | | | | | | | | | |
|---|---|---|---|---|---|---|---|---|---|---|
| 1 ) C22A: behenyl acrylate, C18A: stearyl acrylate, C16A: cetyl acrylate, C1A: methyl acrylate, AA: acrylic acid EHA: 2-ethylhexyl acrylate POB-A: 2-propenoic acid (3-phenoxyphenyl) methyl ester, HRD-01: 2-(O-phenylphenoxy) ethyl acrylate | | | | | | | | | | |

### [Examples 1 to 7]

### <Production of Thermosensitive Light Control Film>

First, a mixture was obtained by mixing a base resin and the additives including the side chain crystal polymers obtained by Synthetic Examples 1 to 7 in the combinations and the ratios (solid weight ratios) shown in Table 2. The base resins used are as follows.
Aclift: "Aclift WK307", which is an ethylene-methyl methacrylate copolymer resin, manufactured by Sumitomo Chemical Co., Ltd.
EVA: "Ultrasen 630" manufactured by Tosoh Corporation
LLDPE: "Niporon L T240F" manufactured by Tosoh Corporation

Next, a light control film was manufactured by using the obtained mixture. Specifically, in Examples 1, 4 to 7, a coating solution was obtained by diluting and dissolving the mixture by toluene so as to have a solid content of 30% by weight. Then, a light control film having a thickness of 40 µm was obtained by applying the obtained coating solution to a mold releasing film by using an applicator, and heating and drying in a hot air circulation oven at 110°C for 5 minutes. As the mold releasing film, a polyethylene terephthalate film having a thickness of 50 µm on which silicone was coated on the surface was used.

In Examples 2 and 3, a kneaded material was obtained by kneading the mixture at 150°C for 15 minutes by using a labo plastmill manufactured by Toyo Seiki Seisaku-sho, Ltd. Then, a light control film having a thickness of 150 µm was obtained by molding and processing the kneaded material by a press machine set at 140°C.

### <Evaluations>

Light control functions of the light control films obtained in Examples 1 to 7 were evaluated. Specifically, first, the light control films were visually observed at room temperature (20°C). Consequently, the light control films were transparent. Then, the light control films were heated to the temperature above the melting point (melting point +5°C) by using a hair dryer and visually observed. Consequently, the light control films got white turbid. Then, the light control films were cooled to the room temperature again and visually observed. Consequently, the light control films became transparent. These results clearly show that in Examples 1 to 7, they are transparent at the temperature below the melting point and are non-transparent at the temperature above the melting point. It can also be seen that in Examples 1-7, they repeatedly become transparent and non-transparent.

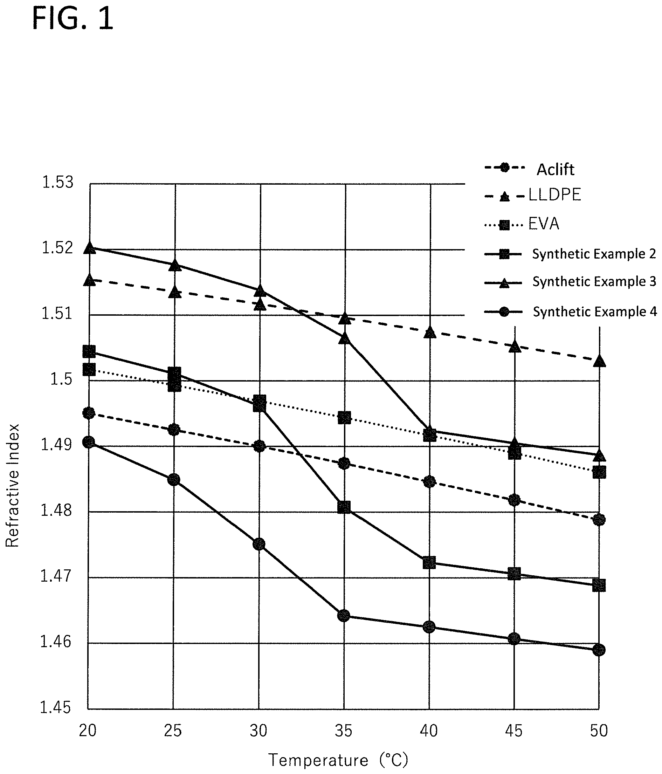

The refractive indexes of the base resin and the additives at 20°C and melting point +5°C are shown in Table 2. The refractive indexes of the base resin and Synthetic Examples 2 to 4 at 20 to 50°C are also shown in FIG. 1. The refractive indexes were values measured by "Abbemat 350", which is an automatic refractometer, manufactured by Anton Paar GmbH.

**[Table 2]**

| | Base Resin | Base Resin: Additive (solid weight ratio) | Refractive Index of Base Resin | | Refractive Index of Additive | | Light Control Function | |
|---|---|---|---|---|---|---|---|---|
| | | | 20°C | Melting Point + 5°C | 20°C | Melting Point + 5°C | 20°C | Melting Point+5°C |
| Example 1 | Aclift | 85:15 | 1.495 | 1.472 | 1.492 | 1.459 | Transparency | White turbidity |
| Example 2 | EVA | 85:15 | 1.502 | 1.492 | 1.504 | 1.472 | Transparency | White turbidity |
| Example 3 | LLDPE | 85:15 | 1.515 | 1.508 | 1.520 | 1.492 | Transparency | White turbidity |
| Example 4 | Aclift | 85:15 | 1.495 | 1.472 | 1.491 | 1.457 | Transparency | White turbidity |
| Example 5 | Aclift | 85:15 | 1.495 | 1.472 | 1.491 | 1.461 | Transparency | White turbidity |
| Example 6 | Aclift | 85:15 | 1.495 | 1.472 | 1.488 | 1.459 | Transparency | White turbidity |
| Example 7 | Aclift | 85:15 | 1.495 | 1.472 | 1.486 | 1.460 | Transparency | White turbidity |

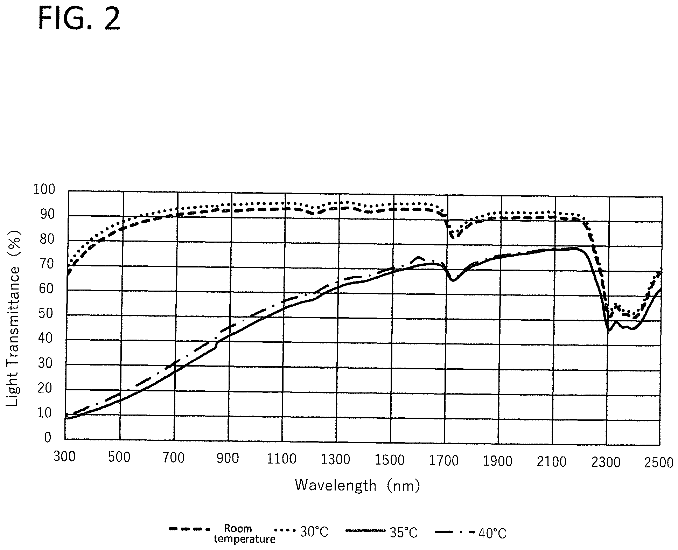

Light transmittances in Example 4 were measured. The results are shown in Figure 2. The light transmittance was measured by "V-570", which is an ultraviolet-visible near infrared spectrophotometer (UV-Vis-NIR), manufactured by JASCO Corporation. The room temperature in Figure 2 is 20°C.

## Claims

1. An additive for a light control film comprising a side chain crystal polymer crystallized at a temperature below a melting point and showing fluidity at a temperature above the melting point.

2. The additive for the light control film according claim 1, wherein the side chain crystal polymer includes a (meth)acrylate having a straight-chain alkyl group having 16 or more carbon atoms as a monomer component.

3. The additive for the light control film according claim 1 or 2, wherein a difference (an absolute value) between a refractive index at the temperature below the melting point and a refractive index at the temperature above the melting point is 0.020 or more.

4. A thermosensitive light control film comprising
the additive for the light control film according to any one of claim 1 to 3, and
a base resin.

5. The thermosensitive light control film according to claim 4, which is transparent at the temperature below the melting point and is non-transparent at the temperature above the melting point.

6. The thermosensitive light control film according to claim 4 or 5, wherein a difference (an absolute value) between a refractive index of the additive for the light control film and a refractive index of the base resin is less than 0.010 at the temperature below the melting point, and
wherein a difference (an absolute value) between a refractive index of the additive for the light control film and a refractive index of the base resin is 0.010 or more at the temperature above the melting point.

7. The thermosensitive light control film according to any one of claims 4 to 6 being for agricultural purposes.
